# EUROPÄISCHE PATENTSCHRIFT

(11) **EP 3 079 944 B1**
(45) Veröffentlichungstag und Bekanntmachung des Hinweises auf die Patenterteilung: **03.10.2018**
(21) Anmeldenummer: 15716048.2
(22) Anmeldetag: 14.04.2015
(51) Int. Cl.: B60L 11/18

(54) **HERSTELLEN EINER LADE- UND EINER ZUGEORDNETEN KOMMUNIKATIONSVERBINDUNG**
ESTABLISHING A CHARGING CONNECTION AND AN ASSOCIATED COMMUNICATION CONNECTION
ÉTABLISSEMENT D'UNE LIAISON DE CHARGE ET D'UNE LIAISON DE COMMUNICATION ASSOCIÉE

(30) Priorität: 17.04.2014 DE 102014207440
(43) Veröffentlichungstag der Anmeldung: 19.10.2016
(73) Patentinhaber: Siemens Aktiengesellschaft, 80333 München (DE)
(72) Erfinder: HEUER, Jörg, 82041 Oberhaching (DE); SCHMITT, Anton, 85591 Vaterstetten (DE); SCHOLZ, Andreas, 85716 Unterschleissheim (DE); WINTER, Martin, 83024 Rosenheim (DE)
(86) Internationale Anmeldenummer: PCT/EP2015/058054
(87) Internationale Veröffentlichungsnummer: WO 2015/158704

(56) Entgegenhaltungen:
- EP-A1- 2 717 428
- DE-A1-102012 012 860
- US-A1- 2014 002 015

## Beschreibung

Die Erfindung betrifft Verfahren und Vorrichtungen zum Herstellen von einer Lade- und einer zugeordneten Kommunikationsverbindung.

Gegenwärtig werden verschiedene Konzepte zum Laden von Elektrofahrzeugen an Ladestationen diskutiert. Hierbei ist es nicht nur notwendig eine Ladeverbindung zwischen der Ladestation und dem Fahrzeug zu haben, über die elektrischer Strom in die Batterie des Fahrzeugs gespeist werden kann, sondern auch vor, während und nach dem Ladevorgang müssen Informationen zwischen der Ladestation und dem Fahrzeug ausgetauscht werden. Diese Informationen betreffen beispielsweise eine Authentifizierung des Fahrzeugs an der Ladestation, eine Überwachung des Ladevorgangs oder auch ein Abrechnen der bezogenen elektrischen Energie nach Beendigung des Ladevorgangs.

Um eine Kommunikation zwischen Fahrzeug und Ladestation sicher zu gestalten, das heißt um Angreifer ein Stören der Kommunikation zu erschweren, ist bekannt eine Kommunikationsverbindung über ein Ladekabel, das physikalisch die Ladestation mit dem Fahrzeug verbindet, zu führen. Hierbei ist jedoch nachteilig, dass zum Einen das Stecken des Ladekabels in das Fahrzeug und in die Ladestation aufwendig ist und zum Anderen das Kabel beispielsweise durch Vandalismus beschädigt und/oder zerstört werden kann. Hierzu wäre es von Vorteil die Ladeverbindung als auch die Kommunikationsverbindung drahtlos zu gestalten, da hierdurch die oben genannten Nachteile des Ladekabels vermieden werden können.

EP 2 717 428 A1 offenbart ein Ladesystem für ein berührungsloses Laden eines Elektrofahrzeugs. Eine Datenübertragung kann dabei über einen ersten Kommunikationsweg oder einen zweiten Kommunikationsweg erfolgen, wobei der zweite Kommunikationsweg eine im Vergleich zum ersten Kommunikationsweg eine eingeschränkte Übertragungsreichweite aufweist.

US 2014/002015 A1 betrifft ein System zum kabellosen Laden eines Elektrofahrzeugs. Die Datenübertragung zwischen Ladestation und Elektrofahrzeug erfolgt dabei über konventionelle Funkverbindungen wie Bluetooth, Zigbee, Mobilfunk oder WLAN erfolgen.

DE 10 2012 012 860 A1 betrifft eine Vorrichtung und eine Einheit zum Bereitstellen einer Assoziationsverbindung für ein Ladesystem zum kabellosen Aufladen eines Elektrofahrzeugs.

Somit ist es die Aufgabe der folgenden Erfindung Verfahren und Vorrichtungen anzugeben, die ein Herstellen von einer Ladeverbindung und einer zugeordneten Kommunikationsverbindung derart gewährleisten, dass eine Assoziation der Ladeverbindung und der Kommunikationsverbindung und somit eine Manipulation der Assoziation der Ladeverbindung und der Kommunikationsverbindung vermieden wird.

Diese Aufgabe wird durch die unabhängigen Ansprüche gelöst. Weiterbildungen der Erfindung sind den abhängigen Ansprüchen zu entnehmen.

Die Erfindung betrifft ein Verfahren zum Herstellen von einer Ladeverbindung und einer zugeordneten Kommunikationsverbindung zwischen einer Ladestation und einem Fahrzeug, wobei das Fahrzeug eine erste Ladeeinrichtung und eine erste Kommunikationsrichtung und die Ladestation eine zweite Ladeeinrichtung und eine zweite Kommunikationseinrichtung aufweisen, dadurch gekennzeichnet, dass das Verfahren folgende Schritte durchläuft:
- Positionieren der ersten Ladeeinrichtung in Bezug auf die zweite Ladeeinrichtung derart, dass Energie zum Laden einer Batterie des Fahrzeugs über die Ladeverbindung übertragen werden kann;
- Ausrichten der zweiten Kommunikationseinrichtung gegenüber der ersten Kommunikationseinrichtung nach Durchführen der Positionierung derart, dass durch die Kommunikationsverbindung ein drahtloser Austausch von Informationen derart durchgeführt werden kann, dass ein Empfang der Informationen durch eine weitere Kommunikationseinrichtung unterbunden wird;
- Einrichten der ersten Kommunikationseinrichtung und der zweiten Kommunikationseinrichtung derart, dass die Informationen mittels jeweils zumindest einer Kommunikationseinheit ausgesendet und /oder empfangen werden.

Hierbei wird die zumindest eine Kommunikationseinheit als eine Ultraschalleinheit, eine Radareinheit, ein Ultraschallsensor oder ein Radarsensor ausgebildet. Dieses Verfahren ist vorteilhaft, da bereits vorhandene Komponenten des Fahrzeugs, wie z.B. die Ultraschallsensoren oder Radarsensoren, für die Kommunikation zwischen Fahrzeug und Ladesäule einsetzbar sind. Hierdurch ist eine kostengünstige Lösung vorgestellt. Zudem kann durch die spezifische Anordnung der ersten und zweiten Kommunikationseinrichtung eine sichere Kommunikation zwischen dem Fahrzeug und der Ladesäule ermöglicht werden, die dann eine Absicherung einer berechtigten Übertragung von Energie über die Ladeverbindung, z.B. mittels Autorisierung und Authentifizierung ermöglichen kann. Zudem kann ein Start der Energieübertragung über die Ladeverbindung erst nach Herstellen der Kommunikationsverbindung zugelassen werden.

Ein besonderer Vorteil der Erfindung wird dadurch erzielt, dass die zumindest eine Kommunikationseinheit in einer Front des Fahrzeugs, insbesondere in einem Stoßfänger, integriert verwendet wird. Hierdurch sind an dem Fahrzeug keine äußerlichen Umbauen notwendig, wodurch das Verfahren kostengünstig umgesetzt werden kann.

Gemäß der Erfindung wird eine Abstrahlcharakteristik der zumindest einen Kommunikationseinheit der zweiten Kommunikationseinrichtung derart eingerichtet, dass abgestrahlte Signale auf zumindest eine der Kommunikationseinheiten der ersten Kommunikationseinrichtung treffen. Hierdurch wird eine Kommunikation sicherer ausgestaltet, da durch die Weiterbildung ein Kompromittieren der Kommunikation zwischen Fahrzeug und Ladesäule weiter erschwert wird.

Im Rahmen diesem Aspekt wird die Abstrahlcharakteristik nach der Positionierung in Abhängigkeit von zumindest einem der folgenden Bedingungen individuell eingestellt:
- Lage der ersten Kommunikationseinrichtung zu der zweiten Kommunikationseinrichtung;
- Modell des Fahrzeugs;
- Oberflächenbeschaffenheit einer Umgebung der ersten Kommunikationseinrichtung.

Hierdurch wird eine Sicherheit bei der Herstellung der Kommunikationsverbindung weiter erhöht. Einem Angreifer der Kommunikationsverbindung und der Ladeverbindung wird der Angriff hierdurch erschwert.

In einer Weiterbildung des Verfahren wird ein Abstand zwischen der ersten und zweiten Kommunikationseinrichtung vor einem Herstellen der Kommunikationsverbindung durch Führen der zweiten Kommunikationseinrichtung in Richtung der ersten Kommunikationseinrichtung verringert wird. Auch diese Vorgehensweise resultiert in einer weiteren Verbesserung einer sicheren Kommunikationsverbindung, da ein Stören bzw. Kompromittieren der Kommunikationsverbindung weiter erschwert wird.

In einer bevorzugten Weiterbildung der Erfindung wird zumindest eine erste Kommunikationseinheit aus mehreren Kommunikationseinheiten der ersten Kommunikationseinrichtung derart ausgewählt, dass die zumindest eine erste Kommunikationseinheit gegenüber der weiteren mehreren Kommunikationseinheiten einen kürzeren Abstand zu der zweiten Kommunikationseinrichtung aufweist. Hierdurch wird eine weitere Steigerung einer Sicherheit der Kommunikationsverbindung erzielt, da ein örtliches Gebiet zwischen Fahrzeug und Ladesäule, in dem die Wellen der Kommunikationseinheiten übertragen werden weiter eingeschränkt werden.

Die Erfindung betrifft ferner eine zweite Kommunikationseinrichtung einer Ladestation zum Herstellen einer, einer Ladeverbindung zugeordneten, Kommunikationsverbindung zwischen der Ladestation und einem Fahrzeug, wobei das Fahrzeug eine erste Ladeeinrichtung und eine erste Kommunikationsrichtung und die Ladestation neben der zweiten Ladeeinrichtung und eine zweite Kommunikationseinrichtung aufweisen, gekennzeichnet durch folgende Einheiten:
- Erste Einheit zum Herstellen der Ladeverbindung nach Positionieren der ersten Ladeeinrichtung in Bezug auf die zweite Ladeeinrichtung derart, dass Energie zum Laden einer Batterie des Fahrzeugs über die Ladeverbindung übertragbar ist;
- Zweite Einheit zum Ausrichten der zweiten Kommunikationseinrichtung gegenüber der ersten Kommunikationseinrichtung nach Durchführen der Positionierung derart, dass durch die Kommunikationsverbindung ein drahtloser Austausch von Informationen derart durchgeführt werden kann, dass ein Empfang der Informationen durch eine weitere Kommunikationseinrichtung unterbunden ist;
- Dritte Einheit zum Einrichten der zweiten Kommunikationseinrichtung gegenüber der ersten Kommunikationseinrichtung derart, dass die Informationen mittels jeweils zumindest einer Kommunikationseinheit aussendbar und /oder empfangbar sind.

Hierbei ist die zumindest eine Kommunikationseinheit als eine Ultraschalleinheit, eine Radareinheit, ein Ultraschallsensor oder ein Radarsensor ausgebildet.

Zudem kann die zweite Kommunikationseinrichtung eine vierte Einheit aufweisen, wobei mit der vierten Einheit zumindest einer der zuvor dargestellten Verfahrensschritte implementierbar und ausführbar ist.

Die Vorteile der zweiten Kommunikationseinrichtung sind analog zu den Vorteilen des Verfahrens.

Zudem betrifft die Erfindung auch eine erste Kommunikationseinrichtung eines Fahrzeugs zum Herstellen einer, einer Ladeverbindung zugeordneten, Kommunikationsverbindung zwischen einer Ladestation und dem Fahrzeug, wobei das Fahrzeug eine erste Ladeeinrichtung und die erste Kommunikationsrichtung und die Ladestation eine zweite Ladeeinrichtung und eine zweite Kommunikationseinrichtung aufweisen, gekennzeichnet durch folgende Einheiten:
- Fünfte Einheit zum Positionieren der ersten Ladeeinrichtung in Bezug auf die zweite Ladeeinrichtung derart, dass Energie zum Laden einer Batterie des Fahrzeugs über die Ladeverbindung übertragbar ist;
- Sechste Einheit zum Ausrichten der ersten Kommunikationseinrichtung gegenüber der zweiten Kommunikationseinrichtung nach Durchführen der Positionierung derart, dass durch die Kommunikationsverbindung ein drahtloser Austausch von Informationen derart durchgeführt werden kann, dass ein Empfang der Informationen durch eine weitere Kommunikationseinrichtung unterbunden ist;
- Siebte Einheit zum Einrichten der ersten Kommunikationseinrichtung gegenüber der zweiten Kommunikationseinrichtung derart, dass die Informationen mittels jeweils zumindest einer Kommunikationseinheit aussendbar und /oder empfangbar sind.

Hierbei ist die zumindest eine Kommunikationseinheit als eine Ultraschalleinheit, eine Radareinheit, ein Ultraschallsensor oder ein Radarsensor ausgebildet.

Die erste Kommunikationseinrichtung kann ferner eine achte Einheit aufweisen, wobei mit der achten Einheit zumindest einer der zuvor dargestellten Verfahrensschritte implementierbar und ausführbar ist.

Die Vorteile der ersten Kommunikationseinrichtung sind analog zu den Vorteilen des Verfahrens.

Schließlich umfasst die Erfindung ein System mit einer ersten Kommunikationseinrichtung und einer zweiten Kommunikationseinrichtung. Die Vorteile sind analog zu den Vorteilen des Verfahrens.

Die Erfindung und ihre Varianten werden anhand von Figuren näher erläutert. Im Einzelnen zeigen:
- Figur 1a: eine Anfahrsituation eines Elektrofahrzeugs in Richtung einer Ladestation;
- Figur 1b: eine Ladesituation, bei der das Fahrzeug zum Laden seiner Batterie bei der Ladestation positioniert ist;
- Figur 2: ein Aufbau einer Kommunikationsverbindung mit einer ersten und zweiten Kommunikationseinrichtung; und
- Figur 3: eine Variante eines Aufbaus einer Kommunikationsverbindung mit der ersten und zweiten Kommunikationseinrichtung;
- Figur 4: einen jeweiligen Aufbau der ersten und zweiten Kommunikationseinrichtung.

Elemente mit gleicher Funktion und Wirkungsweise sind in den Figuren mit denselben Bezugszeichen versehen.

Die folgenden Beispiele stellen die Erfindung anhand von Ultraschalleinheiten, bzw. Ultraschallsensoren, vor. Anstelle von Ultraschalleinheiten können auch andere Kommunikationseinheiten, wie z.B. Radareinheiten bzw. Radarsensoren oder Einheiten bzw. Sensoren kommunizierend in einem anderen Frequenzband als Ultraschall und Radar eingesetzt werden.

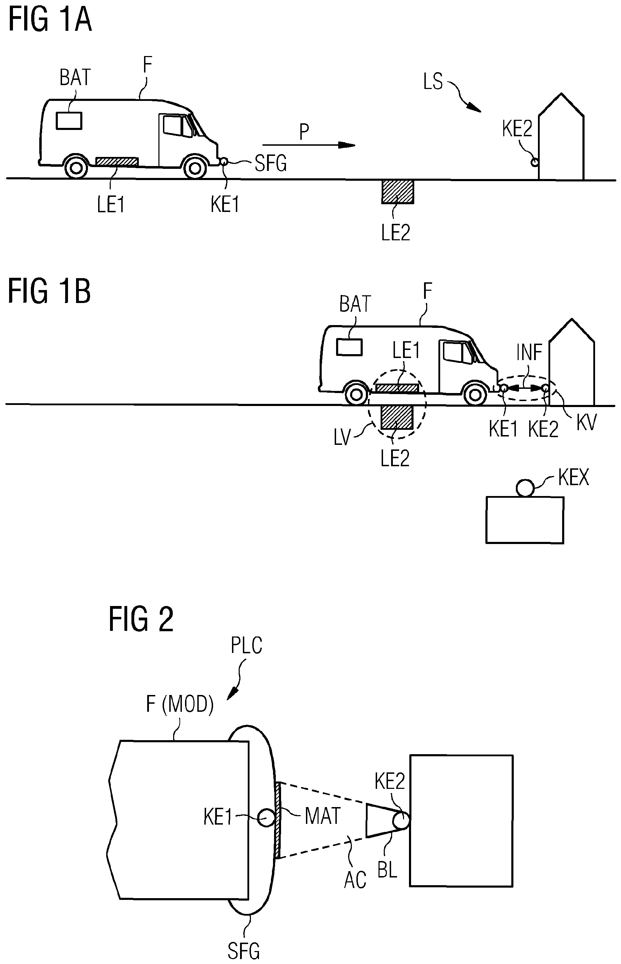

Figur 1a zeigt eine Anfahrsituation eines Fahrzeugs F in Richtung einer Ladestation LS. Das Fahrzeug F weist eine erste Ladeeinrichtung LE1 zum Aufnehmen elektrischer Energie zum Laden seiner Batterie BAT auf. Zudem verfügt das Fahrzeug über eine erste Kommunikationseinrichtung KE1, welche in diesem Beispiel an der Stoßstange des Fahrzeugs angebracht ist. Wie mit einem Pfeil P angedeutet, bewegt sich das Fahrzeug in Richtung der Ladestation.

Die Ladestation verfügt über eine zweite Ladeeinrichtung LE2, die nach erfolgreicher Positionierung der ersten Ladeeinrichtung über der zweiten Ladeeinrichtung elektrische Energie an die erste Ladeeinrichtung zum Laden der Batterie des Fahrzeugs bspw. induktiv übertragen kann. Zudem verfügt die Ladestation über eine zweite Kommunikationseinrichtung KE2 um nachfolgend auch eine Kommunikationsverbindung KV mit der ersten Kommunikationseinrichtung des Fahrzeugs aufnehmen zu können.

Bevor die Kommunikationsverbindung aufgebaut werden kann, muss das Fahrzeug seine erste Ladeeinrichtung positionsgenau über der zweiten Ladeeinrichtung der Ladestation positionieren. Erst wenn diese Positionierung erfolgreich abgeschlossen ist kann eine Kommunikation über die Kommunikationsverbindung hergestellt werden. Hierzu wird die zweite Kommunikationseinrichtung gegenüber der ersten Kommunikationseinrichtung, alternative auch die erste Kommunikationseinrichtung gegenüber der zweiten Kommunikationseinrichtung, nach Durchführen der Positionierung derart ausgerichtet, dass die Kommunikationsverbindung zum drahtlosen Austausch von Informationen INF ausgestaltet ist. Die Ausrichtung findet derart statt, dass bei Aufnahme der Kommunikationsverbindung die Informationen nur zwischen der ersten und zweiten Kommunikationseinrichtung empfangbar sind, sodass weitere Kommunikationseinrichtungen KEX die Informationen nicht empfangen können.

Figur 2 zeigt eine Anordnung der ersten und zweiten Kommunikationseinrichtung in der Gestalt, dass hierdurch ein Empfang der Informationen durch die weitere Kommunikationseinrichtung unterbunden wird. In dem vorliegenden Beispiel weisen die erste und die zweite Kommunikationseinrichtung jeweils zumindest eine Ultraschalleinheit auf, der jeweils Informationen senden und/oder empfangen kann. Die Ultraschalleinheit kann als Ultraschallsensor ausgebildet sein. Zum Unterbinden des Abhörens der Information durch die weitere Kommunikationseinrichtung schränkt die zweite Kommunikationseinrichtung eine Abstrahlungscharakteristik AC der zumindest einen Ultraschalleinheit derart ein, dass diese nur in einer eng begrenzten Umgebung der Ultraschalleinheit der ersten Kommunikationseinrichtung empfangbar ist, beispielsweise in einem Radius um die erste Kommunikationseinrichtung von 5 cm.

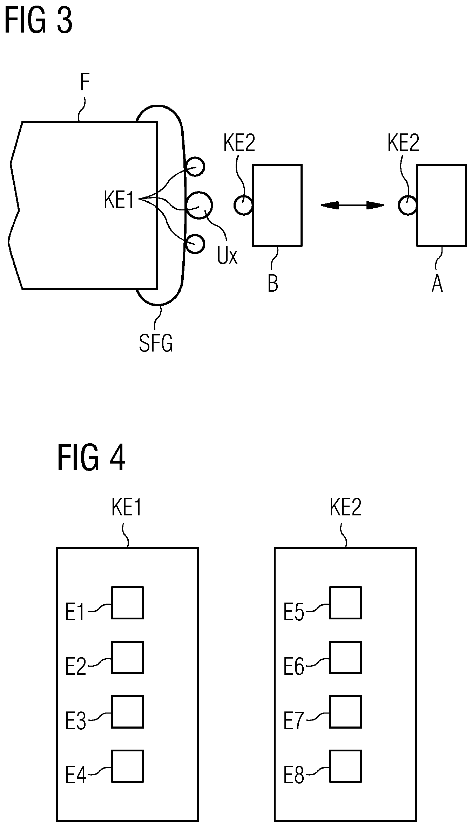

Zur Beeinflussung der Abschaltcharakteristik eines Signals kann die zweite Kommunikationseinrichtung beispielsweise die Lage der ersten Kommunikationseinrichtung vermessen. Dies kann beispielsweise durch die Ultraschalleinheit selbst erfolgen, da das Signal in der Regel nach Ausstrahlen von der Oberfläche des Fahrzeugs reflektiert und durch die zweite Kommunikationseinrichtung hierdurch eine Laufzeit des Hin- und Rücksignals ermittelt werden kann. In Abhängigkeit von der ermittelten Distanz kann ein Abstand zwischen der ersten und der zweiten Kommunikationseinrichtung aktiv vermindert werden, indem die zweite Kommunikationseinrichtung näher an die erste Kommunikationseinrichtung positioniert wird. Dies ist in Figur 3 zu sehen, in der die zweite Kommunikationseinrichtung zunächst an Position A und dann nach Ermittlung der Distanz zwischen erster und zweiter Kommunikationseinrichtung beispielsweise auf 5 cm Abstand zur ersten Kommunikationseinrichtung auf Position B geschoben wird.

In einer alternativen oder zusätzlichen Ausführungsform kann durch die Ladestation das Modell des Fahrzeugs und somit eine Lage der ersten Kommunikationseinrichtung, die spezifisch für ein jeweiliges Modell eines Fahrzeugs ist, erkannt werden. Die Erkennung kann beispielsweise mit Hilfe einer Videokamera und einer nachgeschalteten Musterverarbeitung in der Ladestation durchgeführt werden. In Abhängigkeit von dem erkannten Modell und damit von der Lage der ersten Kommunikationseinrichtung kann eine Lage der zweiten Kommunikationseinrichtung zum Beispiel ein Abstand oder eine Höhe der Abschaltcharakteristik über Boden in Abhängigkeit des Modells des jeweiligen Fahrzeugs angepasst werden.

Ferner kann eine Oberflächenbeschaffenheit in einer Umgebung der ersten Kommunikationseinrichtung durch die zweite Kommunikationseinrichtung ermittelt werden. Hierbei kann beispielsweise mit Hilfe der Reflexionseigenschaften der durch die zweite Kommunikationseinrichtung abgestrahlten Ultraschallwelle, die durch die Oberfläche des Fahrzeugs reflektiert wird, auf eine Oberflächenbeschaffenheit des Fahrzeugs rückgeschlossen werden. Ferner kann auch auf Grundlage des Modells des Fahrzeugs die Oberflächenbeschaffenheit in der Umgebung der ersten Kommunikationseinrichtung ermittelt werden. Je nach Oberflächenbeschaffenheit der Umgebung wird die Abschaltcharakteristik verändert um ungewünschte Abstrahlung von Informationen zu weiteren Kommunikationseinrichtungen zu vermeiden, beispielsweise durch Reduzierung eines Abstands der zweiten Kommunikationseinrichtung zur zweiten Kommunikationseinrichtung oder durch Eingrenzung eines Abstrahlwinkels der Ultraschallwellen durch die zweite Kommunikationseinrichtung.

Heutzutage sind Fahrzeuge mit mehreren Ultraschalleinheiten z.B. in der Stoßstange ausgestattet, um beispielsweise einen Fahrzeuglenker beim Einparken auf Hindernisse vor oder hinter dem Fahrzeug aufmerksam zu machen. Um eine Sicherheit bei der Kommunikation zwischen der ersten und der zweiten Kommunikationseinrichtung zu erhöhen kann in der ersten Kommunikationseinrichtung nur eine oder zwei der mehreren Ultraschalleinheiten zum Austausch von Information eingesetzt werden. Insbesondere kann die Ultraschalleinheit bzw. können die Ultraschalleinheiten der ersten Kommunikationseinrichtung aktiv sein, die einen kürzesten Abstand zu der zumindest einen Ultraschalleinheit der zweiten Kommunikationseinrichtung aufweisen, z.B. werden die zwei der Ultraschalleinheiten der ersten Kommunikationseinrichtung selektiert, die im Vergleich zu den anderen Ultraschalleinheiten der ersten Kommunikationseinrichtung einen kürzesten Abstand zu der zumindest einen Ultraschalleinheit der zweiten Kommunikationseinrichtung haben.

Die zweite Kommunikationseinrichtung kann durch folgende Einheiten realisiert werden:
- Erste Einheit E1 zum Herstellen der Ladeverbindung LV nach Positionieren der ersten Ladeeinrichtung LE1 in Bezug auf die zweite Ladeeinrichtung LE2 derart, dass Energie zum Laden einer Batterie BAT des Fahrzeugs F über die Ladeverbindung LV übertragbar ist;
- Zweite Einheit E2 zum Ausrichten der zweiten Kommunikationseinrichtung KE2 gegenüber der ersten Kommunikationseinrichtung KE1 nach Durchführen der Positionierung derart, dass durch die Kommunikationsverbindung KV ein drahtloser Austausch von Informationen INF derart durchgeführt werden kann, dass ein Empfang der Informationen INF durch eine weitere Kommunikationseinrichtung KEX unterbunden ist;
- Dritte Einheit E3 zum Einrichten der zweiten Kommunikationseinrichtung KE2 gegenüber der ersten Kommunikationseinrichtung KE1 derart, dass die Informationen INF mittels jeweils zumindest einer Kommunikationseinheit aussendbar und /oder empfangbar sind.

Ferner kann die zweite Kommunikationseinrichtung KE2 eine vierte Einheit E4 aufweisen, wobei mit der vierten Einheit E4 Weiterbildungen und Alternativen der Erfindung implementierbar und ausführbar sind.

Die erste Kommunikationseinrichtung KE1 kann durch folgende Einheiten implementiert und realisiert werden:
- Fünfte Einheit E5 zum Positionieren der ersten Ladeeinrichtung LE1 in Bezug auf die zweite Ladeeinrichtung LE2 derart, dass Energie zum Laden einer Batterie BAT des Fahrzeugs F über die Ladeverbindung LV übertragbar ist;
- Sechste Einheit E6 zum Ausrichten der ersten Kommunikationseinrichtung KE1 gegenüber der zweiten Kommunikationseinrichtung KE2 nach Durchführen der Positionierung derart, dass durch die Kommunikationsverbindung KV ein drahtloser Austausch von Informationen INF derart durchgeführt werden kann, dass ein Empfang der Informationen INF durch eine weitere Kommunikationseinrichtung KEX unterbunden ist;
- Siebte Einheit E7 zum Einrichten der ersten Kommunikationseinrichtung KE1 gegenüber der zweiten Kommunikationseinrichtung KE2 derart, dass die Informationen INF mittels jeweils zumindest einer Kommunikationseinheit aussendbar und /oder empfangbar sind.

Ferner kann die erste Kommunikationseinrichtung KE1 eine achte Einheit E8 aufweisen, wobei mit der achten Einheit E8 Weiterbildungen und Alternativen der Erfindung implementierbar und ausführbar sind.

Die Einheiten der ersten und zweiten Kommunikationseinrichtung, siehe Figur 4, können zumindest teilweise in Software und/oder in einer Kombination aus Soft- und Hardware implementiert und realisiert werden. Dabei können die in Software realisierten Bestandteile der Einheiten in Form von maschinenlesbaren Code implementiert werden, wobei dieser Code auf einer Speichereinheit abgelegt und von dort über eine Verbindung zu zumindest einen Prozessor zur Ausführung übertragen werden kann. Zudem kann an dem Prozessor ferner eine Ein- und/oder Ausgabeeinheit angeschlossen sein, über die der Prozessor Informationen mit Kommunikationseinheiten austauscht, z.B. über die Ultraschallsensoren.

Die Erfindung ist einsetzbar im Umfeld eines elektrischen Betankens von Fahrzeugen, wie Elektroroller, Elektroauto, Elektrobus oder Elektrolastkraftwagen. Zudem ist im Rahmen der Erfindung unter Fahrzeug jede Art von sich selbst fortbewegende Einheit, wie z.B. autark agierende Staubsauger, Serviceroboter, Boote, Schiffe und ähnliches, zu verstehen.

## Patentansprüche

1. Verfahren zum Herstellen von einer Ladeverbindung (LV) und einer zugeordneten Kommunikationsverbindung (KV) zwischen einer Ladestation (LS) und einem Fahrzeug (F), wobei das Fahrzeug (F) eine erste Ladeeinrichtung (LE1) und eine erste Kommunikationsrichtung (KE1) und die Ladestation (LS) eine zweite Ladeeinrichtung (LE2) und eine zweite Kommunikationseinrichtung (KE2) aufweisen, wobei das Verfahren folgende Schritte durchläuft:
- Positionieren der ersten Ladeeinrichtung (LE1) in Bezug auf die zweite Ladeeinrichtung (LE2) derart, dass Energie zum Laden einer Batterie (BAT) des Fahrzeugs (F) über die Ladeverbindung (LV) übertragen werden kann;
- Ausrichten der zweiten Kommunikationseinrichtung (KE2) gegenüber der ersten Kommunikationseinrichtung (KE1) nach Durchführen der Positionierung derart, dass durch die Kommunikationsverbindung (KV) ein drahtloser Austausch von Informationen (INF) derart durchgeführt werden kann, dass ein Empfang der Informationen (INF) durch eine weitere Kommunikationseinrichtung (KEX) unterbunden wird;
- Einrichten der ersten Kommunikationseinrichtung (KE1) und der zweiten Kommunikationseinrichtung (KE2) derart, dass die Informationen (INF) mittels jeweils zumindest einer Kommunikationseinheit ausgesendet und /oder empfangen werden;
wobei die zumindest eine Kommunikationseinheit eine Ultraschalleinheit, eine Radareinheit, einen Ultraschallsensor oder einen Radarsensor umfasst, und
wobei, eine Abstrahlcharakteristik (AC) der zumindest einen Kommunikationseinheit der zweiten Kommunikationseinrichtung (KE2) derart eingerichtet wird, dass abgestrahlte Signale auf zumindest eine der Kommunikationseinheiten, der ersten Kommunikationseinrichtung (KE1) treffen, und
die Abstrahlcharakteristik (AC) nach der Positionierung in Abhängigkeit von zumindest einem der folgenden Bedingungen individuell eingestellt wird:
- Lage (PLC) der ersten Kommunikationseinrichtung (KE1) zu der zweiten Kommunikationseinrichtung (KE2);
- Oberflächenbeschaffenheit (MAT) einer Umgebung der ersten Kommunikationseinrichtung (KE1).

2. Verfahren nach Anspruch 1, bei dem die zumindest eine Kommunikationseinheit in einer Front (SFG) des Fahrzeugs, insbesondere in einem Stoßfänger, integriert verwendet wird.

3. Verfahren nach einem der vorhergehenden Ansprüche, bei dem ein Abstand (ABS) zwischen der ersten und zweiten Kommunikationseinrichtung (K1, KE2) vor einem Herstellen der Kommunikationsverbindung (KV) durch Führen der zweiten Kommunikationseinrichtung (KE2) in Richtung der ersten Kommunikationseinrichtung (KE1) verringert wird.

4. Verfahren nach einem der vorhergehenden Ansprüche, bei dem eine erste Kommunikationseinheit (UX) aus mehreren Kommunikationseinheiten der ersten Kommunikationseinrichtung (KE1) derart ausgewählt wird, dass die erste Kommunikationseinheit (UX) gegenüber der mehreren Kommunikationseinheiten einen kürzesten Abstand zu der zweiten Kommunikationseinrichtung KE2 aufweist.

5. Zweite Kommunikationseinrichtung (KE2) einer Ladestation (LS) zum Herstellen einer, einer Ladeverbindung (LV) zugeordneten, Kommunikationsverbindung (KV) zwischen der Ladestation (LS) und einem Fahrzeug (F), wobei das Fahrzeug (F) eine erste Ladeeinrichtung (LE1) und eine erste Kommunikationsrichtung (KE1) aufweist, und die Ladestation (LS) neben der zweiten Ladeeinrichtung (LE2) die zweite Kommunikationseinrichtung (KE2) aufweist, wobei die zweite Kommunikationseinrichtung (KE2) folgende Einheiten umfasst:
- Erste Einheit (E1) zum Herstellen der Ladeverbindung (LV) nach Positionieren der ersten Ladeeinrichtung (LE1) in Bezug auf die zweite Ladeeinrichtung (LE2) derart, dass Energie zum Laden einer Batterie (BAT) des Fahrzeugs (F) über die Ladeverbindung (LV) übertragbar ist;
- Zweite Einheit (E2) zum Ausrichten der zweiten Kommunikationseinrichtung (KE2) gegenüber der ersten Kommunikationseinrichtung (KE1) nach Durchführen der Positionierung derart, dass durch die Kommunikationsverbindung (KV) ein drahtloser Austausch von Informationen (INF) derart durchgeführt werden kann, dass ein Empfang der Informationen (INF) durch eine weitere Kommunikationseinrichtung (KEX) unterbunden ist;
- Dritte Einheit (E3) zum Einrichten der zweiten Kommunikationseinrichtung (KE2) gegenüber der ersten Kommunikationseinrichtung (KE1) derart, dass die Informationen (INF) mittels jeweils zumindest einer Kommunikationseinheit aussendbar und /oder empfangbar sind;
wobei die zweite Kommunikationseinrichtung (KE2) die zumindest eine Kommunkationseinheit umfasst; wobei die zumindest eine Kommunikationseinheit eine Ultraschalleinheit, eine Radareinheit, einen Ultraschallsensor oder einen Radarsensor umfasst, und
wobei, eine Abstrahlcharakteristik (AC) der zumindest einen Kommunikationseinheit der zweiten Kommunikationseinrichtung (KE2) derart eingerichtet ist, dass abgestrahlte Signale auf zumindest eine der Kommunikationseinheiten, der ersten Kommunikationseinrichtung (KE1) treffen, und
die Abstrahlcharakteristik (AC) nach der Positionierung in Abhängigkeit von zumindest einem der folgenden Bedingungen individuell eingestellt wird:
- Lage (PLC) der ersten Kommunikationseinrichtung (KE1) zu der zweiten Kommunikationseinrichtung (KE2);
- Oberflächenbeschaffenheit (MAT) einer Umgebung der ersten Kommunikationseinrichtung (KE1).

6. Erste Kommunikationseinrichtung (KE1) eines Fahrzeugs (F) zum Herstellen einer, einer Ladeverbindung (LV) zugeordneten, Kommunikationsverbindung (KV) zwischen einer Ladestation (LS) und dem Fahrzeug (F), wobei das Fahrzeug (F) eine erste Ladeeinrichtung (LE1) und die erste Kommunikationsrichtung (KE1) und die Ladestation (LS) eine zweite Ladeeinrichtung (LE2) und eine zweite Kommunikationseinrichtung (KE2) aufweisen, wobei die erste Kommunikationseinrichtung (KE1) folgende Einheiten umfasst:
- Fünfte Einheit (E5) zum Positionieren der ersten Ladeeinrichtung (LE1) in Bezug auf die zweite Ladeeinrichtung (LE2) derart, dass Energie zum Laden einer Batterie (BAT) des Fahrzeugs (F) über die Ladeverbindung (LV) übertragbar ist;
- Sechste Einheit (E6) zum Ausrichten der ersten Kommunikationseinrichtung (KE1) gegenüber der zweiten Kommunikationseinrichtung (KE2) nach Durchführen der Positionierung derart, dass durch die Kommunikationsverbindung (KV) ein drahtloser Austausch von Informationen (INF) derart durchgeführt werden kann, dass ein Empfang der Informationen (INF) durch eine weitere Kommunikationseinrichtung (KEX) unterbunden ist;
- Siebte Einheit (E7) zum Einrichten der ersten Kommunikationseinrichtung (KE1) gegenüber der zweiten Kommunikationseinrichtung (KE2) derart, dass die Informationen (INF) mittels jeweils zumindest einer Kommunikationseinheit aussendbar und /oder empfangbar sind;
wobei die erste Kommunikationseinrichtung (KE1) die zumindest eine Kommunikationseinheit umfasst; **dadurch gekennzeichnet, dass** die zumindest eine Kommunikationseinheit eine Ultraschalleinheit, eine Radareinheit, einen Ultraschallsensor oder einen Radarsensor umfasst.

7. System (SYS) umfassend
eine erste Kommunikationseinrichtung (KE1) gemäß Anspruch 6, und eine zweite Kommunikationseinrichtung (KE2) gemäß Anspruch 5.

## Claims

1. Method for establishing a charging connection (LV) and an associated communication connection (KV) between a charging station (LS) and a vehicle (F), the vehicle (F) having a first charging device (LE1) and a first communication direction (KE1) and the charging station (LS) having a second charging device (LE2) and a second communication device (KE2), wherein the method passes through the following steps:
- positioning the first charging device (LE1) with respect to the second charging device (LE2) in such a manner that energy for charging a battery (BAT) of the vehicle (F) can be transmitted via the charging connection (LV);
- orienting the second communication device (KE2) with respect to the first communication device (KE1), after performing the positioning, in such a manner that a wireless exchange of information (INF) can be performed by the communication connection (KV) in such a manner that a reception of information (INF) by a further communication device (KEX) is prevented;
- configuring the first communication device (KE1) and the second communication device (KE2) in such a manner that the information (INF) is sent out and/or received by means of in each case at least one communication unit;
wherein the at least one communication unit comprises an ultrasonic unit, a radar unit, an ultrasonic sensor or a radar sensor, and
wherein a radiation characteristic (AC) of the at least one communication unit of the second communication device (KE2) is configured in such a manner that radiated signals impinge on at least one of the communication units of the first communication device (KE1), and
the radiation characteristic (AC), after the positioning, is adjusted individually in dependence on at least one of the following conditions:
- position (PLC) of the first communication device (KE1) with respect to the second communication device (KE2);
- model (MOD) of the vehicle;
- surface condition (MAT) of an environment of the first communication device KE1).

2. Method according to Claim 1, in which the at least one communication unit is used integrated in a front (SFG) of the vehicle, particularly in a bumper.

3. Method according to one of the preceding claims, in which a distance (ABS) between the first and second communication device (K1, KE2), before establishing the communication connection (KV), is reduced by guiding the second communication device (KE2) in the direction of the first communication device (KE1).

4. Method according to one of the preceding claims, in which a first communication unit (UX) from a number of communication units of the first communication device (KE1) is selected in such a manner that the first communication unit (UX) has a shortest distance from the second communication device with respect to the number of communication units.

5. Second communication device (KE2) of a charging station (LS) for establishing a communication connection (KV), associated with a charging connection (LV), between the charging station (LS) and a vehicle (F), wherein the vehicle (F) has a first charging device (LE1) and a first communication direction (KE1), and the charging station (LS) has, apart from the second charging device (LE2), the second communication device (KE2), wherein the second communication device (KE2) comprises the following units:
- first unit (E1) for establishing the charging connection (LV) after positioning the first charging device (LE1) with respect to the second charging device (LE2) in such a manner that energy for charging a battery (BAT) of the vehicle (F) can be transmitted via the charging connection (LV);
- second unit (E2) for orienting the second communication device (KE2) with respect to the first communication device (KE1) after performing the positioning, in such a manner that a wireless exchange of information (INF) can be performed by the communication connection (KV), in such a manner that a reception of the information (INF) by a further communication device (KEX) is prevented;
- third unit (E3) for configuring the second communication device (KE2) with respect to the first communication device (KE1) in such a manner that the information (INF) can be sent out and/or received by means of in each case at least one communication unit;
wherein the second communication device (KE2) comprises the at least one communication unit; wherein the at least one communication unit comprises an ultrasonic unit, a radar unit, an ultrasonic sensor or a radar sensor, and
a radiation characteristic (AC) of the at least one communication unit of the second communication device (KE2) is configured in such a manner that radiated signals impinge on at least one of the communication units of the first communication device (KE1), and
the radiation characteristic (AC), after the positioning, is adjusted individually in dependence on at least one of the following conditions:
- position (PLC) of the first communication device (KE1) with respect to the second communication device (KE2);
- surface condition (MAT) of an environment of the first communication device KE1).

6. First communication device (KE1) of a vehicle (F) for establishing a communication connection (KV), associated with a charging connection (LV), between a charging station (LS) and the vehicle (F), wherein the vehicle (F) has a first charging device (LE1) and the first communication direction (KE1), and the charging station (LS) has a second charging device (LE2) and a second communication device (KE2), wherein the first communication device (KE1) comprises the following units:
- fifth unit (E5) for positioning the first charging device (LE1) with respect to the second charging device (LE2) in such a manner that energy for charging a battery (BAT) of the vehicle (F) can be transmitted via the charging connection (LV) ;
- sixth unit (E6) for orienting the first communication device (KE1) with respect to the second communication device (KE2) after performing the positioning, in such a manner that a wireless exchange of information (INF) can be performed by the communication connection (KV) in such a manner that a reception of the information (INF) by a further communication device (KEX) is prevented;
- seventh unit (E7) for configuring the first communication device (KE1) with respect to the second communication device (KE2) in such a manner that the information (INF) can be sent out and/or received by means of in each case at least one communication unit;
wherein the first communication device (KE1) comprises the at least one communication unit;
**characterized in that** the at least one communication unit comprises an ultrasonic unit, a radar unit, an ultrasonic sensor or a radar sensor.

7. System (SYS) comprising
a first communication device (KE1) according to Claim 6, and a second communication device (KE2) according to Claim 5.

## Revendications

1. Procédé pour établir une liaison de recharge (LV) et une liaison de communication associée (KV) entre une borne de recharge (LS) et un véhicule (F), le véhicule (F) comportant un premier dispositif de recharge (LE1) et un premier dispositif de communication (KE1) et la borne de recharge (LS) comportant un deuxième dispositif de recharge (LE2) et un deuxième dispositif de communication (KE2), le procédé passant par les étapes suivantes :
- positionnement du premier dispositif de recharge (LE1) par rapport au deuxième dispositif de recharge (LE2) de telle sorte que de l'énergie pour recharger une batterie (BAT) du véhicule (F) peut être transportée via la liaison de recharge (LV) ;
- orientation du deuxième dispositif de communication (KE2) par rapport au premier dispositif de communication (KE1) après exécution du positionnement de telle sorte que la liaison de communication (KV) permet d'exécuter un échange d'informations (INF) sans fil de telle sorte qu'une réception des informations (INF) par un autre dispositif de communication (KEX) est empêchée ;
- configuration du premier dispositif de communication (KE1) et du deuxième dispositif de communication (KE2) de telle sorte que les informations (INF) sont émises et/ou reçues au moyen de respectivement au moins une unité de communication ;
l'au moins une unité de communication comprenant une unité à ultrasons, une unité radar, un capteur à ultrasons ou un capteur radar et
une caractéristique de rayonnement (AC) de l'au moins une unité de communication du deuxième dispositif de communication (KE2) étant configurée de telle sorte que des signaux émis frappent au moins une des unités de communication du premier dispositif de communication (KE1) et
la caractéristique de rayonnement (AC) étant réglée individuellement après le positionnement en fonction d'au moins une des conditions suivantes :
- position (PLC) du premier dispositif de communication (KE1) par rapport au deuxième dispositif de communication (KE2) ;
- qualité de surface (MAT) d'un environnement du premier dispositif de communication (KE1).

2. Procédé selon la revendication 1, dans lequel l'au moins une unité de communication est utilisée intégrée dans une partie frontale (SFG) du véhicule, et plus particulièrement dans un pare-chocs.

3. Procédé selon l'une des revendications précédentes, dans lequel une distance (ABS) entre les premier et deuxième dispositifs de communication (K1, KE2) est réduite avant l'établissement de la liaison de communication (KV) par guidage du deuxième dispositif de communication (KE2) en direction du premier dispositif de communication (KE1).

4. Procédé selon l'une des revendications précédentes, dans lequel une première unité de communication (UX) est choisie de manière telle parmi plusieurs unités de communication du premier dispositif de communication (KE1) que la première unité de communication (UX), en comparaison avec les plusieurs unités de communication, présente une distance plus courte par rapport au deuxième dispositif de communication KE2.

5. Deuxième dispositif de communication (KE2) d'une borne de recharge (LS) pour établir une liaison de communication (KV), associée à une liaison de recharge (LV), entre la borne de recharge (LS) et un véhicule (F), le véhicule (F) comportant un premier dispositif de recharge (LE1) et un premier dispositif de communication (KE1), et la borne de recharge (LS) comportant, outre le deuxième dispositif de recharge (LE2), le deuxième dispositif de communication (KE2), le deuxième dispositif de communication (KE2) comprenant les unités suivantes :
- première unité (E1) pour établir la liaison de recharge (LV) après le positionnement du premier dispositif de recharge (LE1) par rapport au deuxième dispositif de recharge (LE2) de telle sorte que de l'énergie pour recharger une batterie (BAT) du véhicule (F) peut être transportée via la liaison de recharge (LV) ;
- deuxième unité (E2) pour orienter le deuxième dispositif de communication (KE2) par rapport au premier dispositif de communication (KE1) après exécution du positionnement de telle sorte que la liaison de communication (KV) permet d'exécuter un échange d'informations (INF) sans fil de telle sorte qu'une réception des informations (INF) par un autre dispositif de communication (KEX) est empêchée ;
- troisième unité (E3) pour configurer le deuxième dispositif de communication (KE2), en comparaison avec le premier dispositif de communication (KE1), de telle sorte que les informations (INF) peuvent être émises et/ou reçues au moyen de respectivement au moins une unité de communication ;
le deuxième dispositif de communication (KE2) comprenant l'au moins une unité de communication ;
l'au moins une unité de communication comprenant une unité à ultrasons, une unité radar, un capteur à ultrasons ou un capteur radar et
une caractéristique de rayonnement (AC) de l'au moins une unité de communication du deuxième dispositif de communication (KE2) étant configurée de telle sorte que des signaux émis frappent au moins une des unités de communication du premier dispositif de communication (KE1) et
la caractéristique de rayonnement (AC) étant réglée individuellement après le positionnement en fonction d'au moins une des conditions suivantes :
- position (PLC) du premier dispositif de communication (KE1) par rapport au deuxième dispositif de communication (KE2) ;
- qualité de surface (MAT) d'un environnement du premier dispositif de communication (KE1).

6. Premier dispositif de communication (KE1) d'un véhicule (F) pour établir une liaison de communication (KV), associée à une liaison de recharge (LV), entre une borne de recharge (LS) et le véhicule (F), le véhicule (F) comportant un premier dispositif de recharge (LE1) et le premier dispositif de communication (KE1), et la borne de recharge (LS) comportant un deuxième dispositif de recharge (LE2) et un deuxième dispositif de communication (KE2), le premier dispositif de communication (KE1) comprenant les unités suivantes :
- cinquième unité (E5) pour positionner le premier dispositif de recharge (LE1) par rapport au deuxième dispositif de recharge (LE2) de telle sorte que de l'énergie pour recharger une batterie (BAT) du véhicule (F) peut être transportée via la liaison de recharge (LV) ;
- sixième unité (E6) pour orienter le premier dispositif de communication (KE1) par rapport au deuxième dispositif de communication (KE2) après exécution du positionnement de telle sorte que la liaison de communication (KV) permet d'exécuter un échange d'informations (INF) sans fil de telle sorte qu'une réception des informations (INF) par un autre dispositif de communication (KEX) est empêchée ;
- septième unité (E7) pour configurer le premier dispositif de communication (KE1), en comparaison avec le deuxième dispositif de communication (KE2), de telle sorte que les informations (INF) peuvent être émises et/ou reçues au moyen de respectivement au moins une unité de communication ;
le premier dispositif de communication (KE1) comprenant l'au moins une unité de communication ;
**caractérisé en ce que** l'au moins une unité de communication comprend une unité à ultrasons, une unité radar, un capteur à ultrasons ou un capteur radar.

7. Système (SYS) comprenant un premier dispositif de communication (KE1) selon la revendication 6 et un deuxième dispositif de communication(KE2) selon la revendication 5.
